# EUROPEAN PATENT SPECIFICATION

(11) **EP 3 542 045 B1**
(45) Date of publication and mention of the grant of the patent: **30.12.2020**
(21) Application number: 16802125.1
(22) Date of filing: 15.11.2016
(51) Int. Cl.: F02M 21/02, B63B 25/16, F02D 19/02

(54) **A LIQUEFIED GAS FUEL FEEDING SYSTEM AND A METHOD OF OPERATING A POWER PLANT OF INTERNAL COMBUSTION ENGINES POWERED WITH LIQUEFIED GAS**
VERFLÜSSIGSTESKRAFTSTOFFSYSTEM UND VERFAHREN ZUM BETREIBEN EIN FLÜSSIGAS-BRENNKRAFTMASCHINENKRAFTWERK
SYSTÈME D'ALIMENTATION DE COMBUSTIBLE À GAZ LIQUÉFIÉ ET PROCÉDÉ DE FONCTIONNEMENT D'UNE CENTRALE ÉLECTRIQUE DE MOTEURS À COMBUSTION INTERNE À MOTEUR À GAZ LIQUÉFIÉ

(43) Date of publication of application: 25.09.2019
(73) Proprietor: Wärtsilä Finland Oy, 65100 Vaasa (FI)
(72) Inventor: HÖGNABBA, Tomas, 65380 Vaasa (FI); ZOGLIA, Piero, 34018 Trieste (IT); LAUNONEN, Frans, 65380 Vaasa (FI); BOARO, Luca, 34018 Trieste (IT)
(74) Representative: Genip Oy
(86) International application number: PCT/FI2016/050804
(87) International publication number: WO 2018/091764

(56) References cited:
- WO-A1-2014/065621
- DE-A1-102016 101 018
- KR-A- 20140 052 886
- KR-A- 20160 041 127
- KR-A- 20160 064 874

## Description

### Technical field

The present invention relates to liquefied gas fuel feeding system according to the preamble of claim 1. Invention relates also to method as recited in the independent method claim.

### Background art

Liquefied gas as a fuel of prime movers in marine vessels and other mobile power plants has increasingly become of interest while the importance of environmental issues of particularly the exhaust emissions have increased.

EP 2032428 B1 discloses an example of a fuel system for gas driven piston engine in a marine vessel, in which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas.

As can be found from the document above liquefied gas is typically stored at extremely low temperature and due to e.g. heat transfer from surrounding a part of the gas is evaporated as so called boil off gas.

The gas driven gas consumers configured to combust gaseous fuel have practically always some demands in respect to the pressure of the gas introduced to the gas consumer. Therefore the pressure needs to be controlled.

For example in EP 2032428 B1 there is shown a pressure build up system which controls the pressure in the tank by controlling the evaporation of the liquefied gas in a heat exchanger of the pressure build up system. The fuel is taken from the bottom part of the tank as liquid fuel and the fuel in evaporated into gas before feeding to the engines.

WO2016163666 A1 discloses is a fuel gas supply system. The fuel gas supply system comprises a storage tank for storing liquefied gas and boil-off gas of the liquefied gas; a compression unit for compressing the boil-off gas supplied from the storage tank; a first pump for pressurizing the liquefied gas supplied from the storage tank; a vaporizer for vaporizing the pressurized liquefied gas; a first supply line for supplying to an engine the boil-off gas, stored in the storage tank, via the compression unit; a second supply line for joining the boil-off gas, stored in the storage tank, at the rear end of the compression unit of the first supply line, via the first pump and the vaporizer; a measurement unit for measuring the pressure or amount of the boil-off gas supplied to the engine; and a control unit for controlling the first pump and the vaporizer on the basis of the measured value, and supplying the liquefied gas through the second supply line.

KR20160041127 A discloses a further example of a fuel gas supply system wherein both BOG and LPG are supplied to a first and a second engine.

It is an object of the invention to provide a new liquefied gas fuel feeding system and method of operating a power plant of internal combustion engines powered with liquefied gas, which is considerably improved compared to the prior art solution.

### Disclosure of the Invention

Objects of the invention can be met substantially as is disclosed in the independent claim and in the other claims describing more details of different embodiments of the invention.

According to an embodiment of the invention the liquefied gas fuel feeding system comprises: a liquefied gas container configured to store liquefied gas and gaseous gas in cryogenic circumstances, a first fuel passage opening into an ullage space of the gas, a second fuel passage opening into a bottom section of the gas and provided with a controllable pump, at least two fuel delivery passages each of which being configured to convey gas to a single gas consumer of at least two gas consumers, and a valve assembly configured to connect the first fuel passage or the second fuel passage alternatively to each one of the at least two fuel delivery passages.

This results in effective manner of utilizing the generation of natural boil off gas in the gas container and providing efficient manner of operating the fuel feeding system.

According to an embodiment of the invention the valve assembly comprises first fuel passage which is provided with a first branching manifold which is provided with a number of first branch passages where the first branch passages are arranged parallel to each other, and where the second fuel passage is provided with a second branching manifold which is provided with a number of second branch passages, where the second branch passages are arranged parallel to each other, and where each first branch passage and each respective second branch passage are connected to each other and further to a respective fuel delivery passage and where the fuel delivery passage is selectably connected either to the first branch passage or to the second branch passage by a valve pair.

According to an embodiment of the invention the valve assembly comprises the first fuel passage which is provided with a first branching manifold which is provided with a number of first branch passages where the first branch passages are arranged parallel to each other and each one of the first branch passages is provided with a valve, and the second fuel passage is provided with a second branching manifold which is provided with a number of second branch passages, where the second branch passages are arranged parallel to each other and each one of the second branch passages is provided with a valve, and where each first branch passage and each respective second branch passage are connected to each other and further to a respective fuel delivery passage.

According to an embodiment of the invention the fuel feeding system comprises a control unit which comprises executable instructions to receive pressure demand information of each one of the at least two gas consumers and which control unit is provided with instructions to connect the first fuel passage or the second fuel passage alternatively to each one of the at least two fuel delivery passages based on the respective pressure demand information.

According to an embodiment of the invention the control unit comprises executable instruction to control the pump such that the gas pressure in the second fuel passage is maintained at a value which is maximum value of the required fuel pressure values of the gas consumers connected to the valve assembly.

According to an embodiment of the invention the gas consumers are internal combustion engines which may be operated at different loads. The fuel feeding system comprises a control unit which comprises executable instructions to detect the pressure in the container, and to detect the demand of fuel pressure of one of the running engines of the power plant and, if the pressure in the container is higher than the demand of the fuel pressure of the engine, then to feed gaseous gas from the gas container to the engine, and if the pressure in the container is lower than the demand of the fuel pressure of the engine, then to supply a flow rate of liquefied gas to a pump, increasing the pressure of the liquefied gas to at least a pressure equal to the demand of the fuel pressure in the pump, and evaporating liquefied gas and feeding the evaporated gas to the engine, and to repeating the instructions to apply each one of the engines running in the power plant.

A method of operating a power plant of internal combustion engines powered with liquefied gas, comprises step of
a) storing fuel in a gas container as liquefied gas and gaseous gas in cryogenic circumstances,
b) detecting the pressure in the container, and
c) detecting the demand of fuel pressure of one of the running engines of the power plant
d) if the pressure in the container is higher than the demand of the fuel pressure of the engine, then feeding gaseous gas from the gas container to the engine, and
e) if the pressure in the container is lower than the demand of the fuel pressure of the engine, then supplying a flow rate of liquefied gas to a pump, increasing the pressure of the liquefied gas to at least a pressure equal to the demand of the fuel pressure in the pump and evaporating liquefied gas and feeding the evaporated gas to the engine, and
f) repeating at least the steps c), d) and e) to each one of the engines running in the power plant, wherein
   a pressure demand information of each one of the at least two engines is obtained and the first fuel passage or the second fuel passage is connected to alternatively each one of the at least two fuel delivery passages based on the respective pressure demand information.

According to an embodiment of the invention a pressure demand information of each one of the at least two engines is obtained and the first fuel passage or the second fuel passage is connected alternatively to each one of the at least two fuel delivery passages based on the respective pressure demand information.

According to an embodiment of the invention the pump is controlled such that the gas pressure in the second fuel passage is maintained at a value which is maximum value of the required fuel pressure values of the engines connected to the valve assembly.

Following advantageous effects and benefits are obtainable with the invention. Firstly, the natural boil off gas is efficiently utilized in the system. Since engines running with lower load utilizes the natural boil off gas the energy required for pumping the forced boil off gas is reduced, and/or can be controlled based on actual demand.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a liquefied gas fuel feeding system according to an embodiment of the invention, and
Figure 2 illustrates an embodiment of a valve assembly for a liquefied gas fuel feeding system according to an embodiment of the invention.

### Detailed Description of Drawings

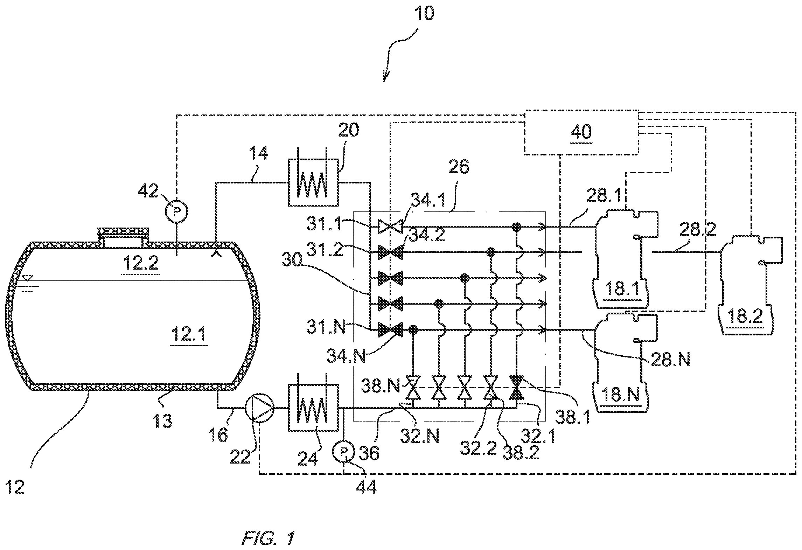

Figure 1 describes an embodiment of a liquefied gas fuel feeding system 10, which is referred to as a fuel feeding system in the following. The fuel feeding system 10 may be assembled in a marine vessel but it is applicable to a land based power plant as well. The fuel feeding system 10 comprises a container 12 which is configured to store liquefied gas and gas at gaseous phase, both in cryogenic circumstances. Particularly, the fuel used may be liquefied natural gas, and it is stored in the container 12 typically at temperature of about -162°C which is considered as cryogenic conditions. The container 12 comprises a heat insulation 13 enclosing the actual tank container 12. The insulation may be for example a double wall vacuum insulation to prevent excessive heat transfer into the container and warming up of the LNG in the tank container. Typically the gas fills the tank container so that a part of the gas is as liquefied gas at the bottom section of the tank 12.1, at a so called liquefied gas space, and part as gaseous gas at the upper part 12.2 i.e. so called ullage space of the container above the of the liquefied gas space.

Even if the container is provided with the heat insulation 13, heat transfer will take place at certain rate which causes evaporation of the liquefied gas. Such gas is referred to here as natural boil off gas, NBOG. Due to the evaporation the pressure in the container increases and therefore the boil of gas may by conveyed to a gas consumer 18 by making use of the pressure in the container 12. For that purposes the fuel feeding system 10 comprises also a first fuel passage 14 and a second fuel passage 16 connected to the container 12. The first fuel passage 14 is arranged to open in the ullage space 12.2 of the container 12 such that gaseous gas may flow into the first fuel passage 14. The second fuel passage 16 is arranged to open into the bottom section 12.1 of the container, such that liquefied gas may flow into the second fuel passage 16. The fuel feeding system is configured to provide fuel to more than one gas consumers 18.1, 18.2, ...18.N, three of which are shown here as an internal combustion piston engine. Thus the gas consumers are advantageously internal combustion piston engines.

The first fuel passage 14 comprises first heat exchanger 20 which is adapted to heat the extremely cold gas up to suitable temperature for feeding into the engines 18.1, 18.2, ...18.N. The second fuel passage 16 comprises a pump 22 for increasing the pressure of the liquefied gas drawn from the container 12 into the second fuel passage 16. This way the pressure in the container 12 need not be maintained at a level to meet the highest pressure demand of the engines.

The second fuel passage 16 is also provided with a second heat exchanger 24 which is adapted to evaporate the liquefied gas into gaseous form and heat the gas to suitable temperature for feeding into the engines 18.1, 18.2, ... 18.N. The second heat exchanger may be called as a main evaporator because during the operation of the engines the gas taken via the second fuel passage 16 is evaporated continuously while the liquefied gas in the container 12 is fed to the engine 18.1, 18.2, ... 18.N. Respectively the gaseous gas provided with the main evaporator is called here as forced boil off gas, FBOG.

The fuel feeding system 10 is provided with a valve assembly 26, into which the first fuel passage 14 and the second fuel passage 16 are connected as source of gaseous fuel. The fuel feeding system 10 comprises at least two fuel delivery passages 28.1, 28.2, ... 28.N via which the valve assembly is connected to the engines 18.1, 18.2, ... 18.N. In the fuel feeding system 10 only one fuel delivery passage 28.1 is connected to one respective engine 18.1 i.e. a gas consumer. Therefore the fuel delivery passage may be called as an engine specific gas line. The valve assembly 26 is configured to connect alternatively the first fuel passage 14 or the second fuel passage 16 to each one of the fuel delivery passages 28.1, 28.2, ... 28.N. In other words, one engine specific gas line is connected to only one of the first fuel passage 14 and the second fuel passage 16 at a time, but still the connection to either one is selectable according to predefined rules.

The valve assembly according to the embodiment shown in the figure 1 is realized in a following manner. The first fuel passage 14 is provided with a first branching manifold 30 which is provided with a number of first branch passages, i.e. a first one of the first branch passage 31.1, a second one of the first branch passage 31.2 and so on. The first branch passages are arranged parallel to each other such that the natural boil off gas may be introduced to each one of them. Each one of the first branch passages is provided with a valve 34.1, 34.2, ... 34.N. The second fuel passage 16 is provided with a second branching manifold 36 which is provided with a number of second branch passages i.e. a first one of the second branch passage 32.1, a second one of the second branch passage 32.2, and so on 32.N. The second branch passages are arranged parallel to each other such that the forced boil off gas may be introduced to each one of them. Each one of the second branch passages is provided with a valve 38.1, 38.2, ... 38.N. In the valve assembly 26 each first branch passage 31.1, 31.2, ...31.N and each respective second branch passage 32.1, 32.2, ...32. N are connected to each other and further to a respective fuel delivery passage 28.1, 28.2, ... 28.N.

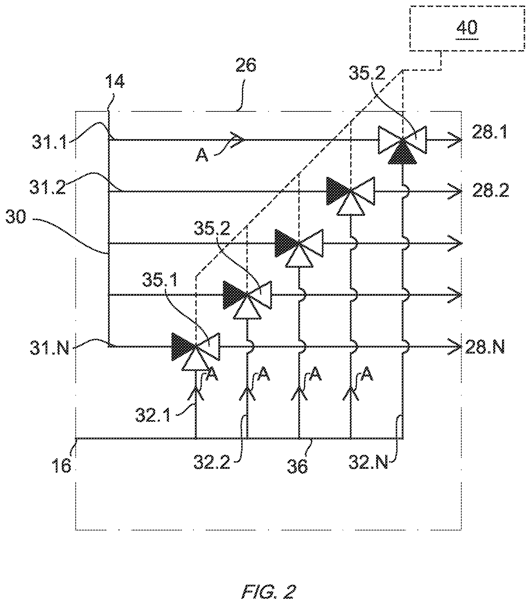

The valve assembly is used for distributing the natural boil off gas and the forced boil off gas to the engines in a certain manner described in the following. The connection of the first branch passage to the second branch passage is downstream the valves which makes it possible to select the source of the fuel - being either natural boil off gas or forced boil off gas - for each gas consumer 18.1 ... 18.N. The valve 34.1 in the first one of the first branch passage 31.1 and the valve 38.1 in the first one of the second branch passage 32.1 constitute a valve pair 34.1-38.1 the status of which rules whether the engine 18.1 is connected to the first fuel passage 14 or to the second fuel passage 16, that is whether the engine 18.1 provided with natural boil off gas or force boil off gas. The valve pair may be realized also by using 3-way valves, as is shown in the figure 2.

In the figure 1 an open valve is shown without fill, having only a border line, and a closed valve is shown with solid filled valve symbol. Therefore in the figure 1 the first engine 18.1 is connected to the first fuel passage 14 running with the natural boil off gas, while the other engines are connected to the second fuel passage 16 running with the forced boil off gas.

The liquefied gas fuel feeding system is also provided with a control unit 40. The control unit may be a dedicated control unit for the fuel feeding system or common to one or all of the gas consumers 18. Firstly the control unit is provided with instruction of required fuel pressure for each one of the gas consumers i.e. the engines 18.1, 18.2, ... 18.N. For that, it is configured to receive pressure demand information of each one of the at least two gas consumers or engines. The required fuel pressure may be selected based on the current load of the engine 18.1, 18.2, ... 18.N. The control unit 40 may be provided with a model which provides the required fuel pressure as a function of the engine load. The model may be in a form of a look-up table. The control unit 40 is provided with instruction of current pressure in the container measured by a first pressure probe 42. The control unit 40 is provided with instruction of current pressure of the force boil off gas in the second fuel passage 16 downstream the pump 22 measured and transmitted by a second pressure probe 44.

The control unit 40 is provided with executable instructions to rule the status of each one of the valve pair 38.1-34.1; 38.2-34.2; 38.N-34.N based on the required fuel pressure of each one of the respective engines 18.1, 18.2, 18.N. The status of the valve pair means that either the valve 34.1 in the first fuel passage 14 is open and the valve 38.1 in the second fuel passage 16 is closed, or the valve 38.1 in the second fuel passage 16 is open and the valve 34.1 in the first fuel passage 14 is closed. The maximum required fuel pressure, required by anyone of the number of engines, if not available in the container, is produced by the pump 22. The executable instructions to define the status of each one of the valve pair 38.1-34.1; 38.2-34.2; 38.N-34.N comprise instructions to determine if the required fuel pressure of the engine is less than the prevailing pressure in the container and if the result of the determination is true, the instructions comprise command to set the status of the valve pair such that the valve 34.1 in the first fuel passage 14 is open and the valve 38.1 in the second fuel passage 16 is closed. And respective if the result of the determination is false, the instructions comprise command to set the status of the valve pair such that the valve 34.1 in the first fuel passage 14 is closed and the valve 38.1 in the second fuel passage 16 is open. Thus, the control unit is provided with instructions to connect alternatively the first fuel passage or the second fuel passage to each one of the at least two fuel delivery passages based on the respective pressure demand information. The control unit comprises also executable instruction to control the pump 22 such that the gas pressure in the second fuel passage is maintained at a value which is maximum value of the required fuel pressure values of the gas consumers 18.1, 18.2, 18.N connected to the valve assembly 26.

In the figure 2 there is shown an embodiment of the valve assembly 26 which is configured to connect alternatively the first fuel passage 14 or the second fuel passage 16 to each one of the fuel delivery passages 28.1, 28.2, ... 28.N. In other words, one engine specific gas line 28.N is connected to only one of the first fuel passage 14 and the second fuel passage 16 at a time, but still the connection to either one is selectable according to predefined rules.

In the valve assembly the first fuel passage 14 is provided with a first branching manifold 30 which is provided with a number of first branch passages, i.e. a first one of the first branch passage 31.1, a second one of the first branch passage 31.2 and so on. The first branch passages are arranged parallel to each other such that the natural boil off gas may be introduced to each one of them. The second fuel passage 16 is provided with a second branching manifold 36 which is provided with a number of second branch passages i.e. a first one of the second branch passage 32.1, a second one of the second branch passage 32.2, and so on 32.N. The second branch passages are arranged parallel to each other such that the forced boil off gas may be introduced to each one of them.

Each one of the first branch passages 31.1 ...31.N and each one of the second branch passages 32.1,...32.N are connected to a three way valve 35.1, 35.2, ... 35.N which three way valve is further connected to a respective fuel delivery passage 28.1, 28.2, ... 28.N. In the figure 2 an open valve section i.e. an open flow direction, is shown without fill, having only a border line symbol, and a closed valve section is shown with solid filled symbol. Therefore in the figure 1 the first engine 18.1 is connected to the first fuel passage 14 running with the natural boil off gas, while the other engines are connected to the second fuel passage 16 running with the forced boil off gas. The active flow paths are also shown with the arrows A in the figure. The valve assembly is operated under control of the control unit 40 in the same manner as is explained in connection with the figure 1.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A liquefied gas fuel feeding system comprising:
- a liquefied gas container (12) configured to store liquefied gas and gaseous gas in cryogenic circumstances,
- a first fuel passage (14) opening into an ullage space (12.2) of the gas container (12),
- a second fuel passage (16) opening into a bottom section (12.1) of the gas container (12) and provided with a controllable pump (22),
- at least two fuel delivery passages (28.1, 28.2, ... 28.N) each of which being configured to convey gas to a single gas consumer of at least two gas consumers (18.1, 18.2, ... 18.N), **characterized in that** the liquefied gas fuel feeding system comprises
- a valve assembly (26) configured to connect the first fuel passage (14) or the second fuel passage (16) alternatively to each one of the at least two fuel delivery passages (28.1, 28.2, ... 28.N).

2. A liquefied gas fuel feeding system according to claim 1, **characterized in that** the valve assembly (26) comprises first fuel passage (14) which is provided with a first branching manifold (30) which is provided with a number of first branch passages (31.1, 31.2, ... 31.N) where the first branch passages are arranged parallel to each other, and that the second fuel passage (16) is provided with a second branching manifold (36) which is provided with a number of second branch passages (32.1, 32.2, ... 32.N), where the second branch passages are arranged parallel to each other, and where each first branch passage (31.1, 31.2, ...31.N) and each respective second branch passage (32.1, 32.2, ...32.N) are connected to each other and further to a respective fuel delivery passage (28.1, 28.2, ... 28. N) and where the fuel delivery passage is selectably connected either to the first branch passage (31.1, 31.2, ...31.N) or to the second branch passage (32.1, 32.2, ...32.N) by a three way valve (35.1, 35.2, ...35.N).

3. A liquefied gas fuel feeding system according to claim 1, **characterized in that** the valve assembly (26) comprises the first fuel passage (14) which is provided with a first branching manifold (30) which is provided with a number of first branch passages (31.1, 31.2, ... 31.N) where the first branch passages are arranged parallel to each other and each one of the first branch passages (31.1, 31.2, ... 31.N) is provided with a valve (34.1, 34.2, ... 34.N), and that the second fuel passage (16) is provided with a second branching manifold (36) which is provided with a number of second branch passages (32.1, 32.2, ... 32.N), where the second branch passages are arranged parallel to each other and each one of the second branch passages (32.1, 32.2, ... 32.N) is provided with a valve (38.1, 38.2, ... 38.N), and where each first branch passage (31.1, 31.2, ...31.N) and each respective second branch passage (32.1, 32.2, ...32.N) are connected to each other and further to a respective fuel delivery passage (28.1, 28.2, ... 28.N).

4. A liquefied gas fuel feeding system according to claim 1, **characterized in that** the fuel feeding system comprises a control unit (40) which comprises executable instructions to receive pressure demand information of each one of the at least two gas consumers (18.1, 18.2, ... 18.N) and which control unit is provided with instructions to connect the first fuel passage (14) or the second fuel passage (16) alternatively to each one of the at least two fuel delivery passages (28.1, 28.2, ... 28.N) based on the respective pressure demand information.

5. A liquefied gas fuel feeding system according to claim 4, **characterized in that** the control unit (40) comprises executable instruction to control the pump (22) such that the gas pressure in the second fuel passage (16) is maintained at a value which is maximum value of the required fuel pressure values of the gas consumers (18.1, 18.2, ...18.N) connected to the valve assembly (26).

6. A liquefied gas fuel feeding system according to claim 1, **characterized in that** gas consumers (18.1, 18.2,... 18.N) are internal combustion piston engines and the fuel feeding system comprises a control unit (40) which comprises executable instructions to detect the pressure in the container (12), and to detect the demand of fuel pressure of one of the running engines of the power plant and, if the pressure in the container is higher than the demand of the fuel pressure of the engine, then to feed gaseous gas from the gas container to the engine, and if the pressure in the container is lower than the demand of the fuel pressure of the engine, then to supply a flow rate of liquefied gas to a pump, increasing the pressure of the liquefied gas to at least a pressure equal to the demand of the fuel pressure in the pump, and evaporating liquefied gas and feeding the evaporated gas to the engine, and to repeating the instructions to apply each one of the engines running in the power plant.

7. A method of operating a power plant of internal combustion engines powered with liquefied gas by means of a liquefied gas fuel feeding system according to any of claims 1-6, comprising the following steps:
a) storing fuel in a gas container (12) as liquefied gas and gaseous gas in cryogenic circumstances,
b) detecting the pressure in the container, and
c) detecting the demand of fuel pressure of one of the running engines of the power plant
d) if the pressure in the container is higher than the demand of the fuel pressure of the engine, then feeding gaseous gas from the gas container to the engine via a first fuel passage (14) opening into an ullage space (12.2) of the gas container (12), and
e) if the pressure in the container is lower than the demand of the fuel pressure of the engine, then supplying a flow rate of liquefied gas to a pump via a second fuel passage (16) opening into a bottom section (12.1) of the gas container (12), increasing the pressure of the liquefied gas to at least a pressure equal to the demand of the fuel pressure in the pump and evaporating liquefied gas and feeding the evaporated gas to the engine,
f) repeating at least the steps c), d) and e) to each one of the engines running in the power plant, wherein a pressure demand information of each one of the at least two engines (18.1, 18.2, ... 18.N) is obtained and the first fuel passage (14) or the second fuel passage (16) is connected to alternatively each one of at least two fuel delivery passages (28.1, 28.2, ... 28.N) based on the respective pressure demand information.

8. A method of operating a power plant of internal combustion engines according to claim 7, **characterized in that** the pump (22) is controlled such that the gas pressure in the second fuel passage (16) is maintained at a value which is maximum value of the required fuel pressure values of the engines (18.1, 18.2,... 18.N) connected to the valve assembly (26).

## Patentansprüche

1. Flüssiggaskraftstoff-Zufuhranlage, die Folgendes umfasst:
- einen Flüssiggasbehälter (12), der dafür konfiguriert ist, verflüssigtes Gas und gasförmiges Gas unter Tieftemperaturumständen zu speichern,
- einen ersten Kraftstoffdurchgang (14), der sich in einen Ausdehnungsraum (12.2) des Gasbehälters (12) öffnet,
- einen zweiten Kraftstoffdurchgang (16), der sich in eine untere Sektion (12.1) des Gasbehälters (12) öffnet und mit einer steuerbaren Pumpe (22) versehen ist,
- wenigstens zwei Kraftstoff-Abgabedurchgänge (28.1, 28.2, ... 28.N), deren jeder dafür konfiguriert ist, Gas zu einem einzigen Gasverbraucher von wenigstens zwei Gasverbrauchern (18.1, 18.2, ... 18.N) zu befördern, **dadurch gekennzeichnet, dass** die Flüssiggaskraftstoff-Zufuhranlage Folgendes umfasst:
- eine Ventilbaugruppe (26), die dafür konfiguriert ist, den ersten Kraftstoffdurchgang (14) oder den zweiten Kraftstoffdurchgang (16) abwechselnd mit jedem der wenigstens zwei Kraftstoff-Abgabedurchgänge (28.1, 28.2, ... 28.N) zu verbinden.

2. Flüssiggaskraftstoff-Zufuhranlage nach Anspruch 1, **dadurch gekennzeichnet, dass** die Ventilbaugruppe (26) den ersten Kraftstoffdurchgang (14) umfasst, der mit einem ersten Abzweigverteiler (30) versehen ist, der mit einer Anzahl von ersten Abzweigdurchgängen (31.1, 31.2, ... 31.N) versehen ist, wobei die ersten Abzweigdurchgänge parallel zueinander angeordnet sind, und dass der zweite Kraftstoffdurchgang (16) mit einem zweiten Abzweigverteiler (36) versehen ist, der mit einer Anzahl von zweiten Abzweigdurchgängen (32.1, 32.2, ... 32.N) versehen ist, wobei die zweiten Abzweigdurchgänge parallel zueinander angeordnet sind, und wobei jeder erste Abzweigdurchgang (31.1, 31.2, ... 31.N) und jeder jeweilige zweite Abzweigdurchgang (32.1, 32.2, ... 32.N) miteinander und ferner mit einem jeweiligen Kraftstoff-Abgabedurchgang (28.1, 28.2, ... 28.N) verbunden sind und wobei der Kraftstoff-Abgabedurchgang wählbar durch ein Dreiwegeventil (35.1, 35.2, ... 35.N) entweder mit dem ersten Abzweigdurchgang (31.1, 31.2, ... 31.N) oder mit dem zweiten Abzweigdurchgang (32.1, 32.2, ... 32.N) verbunden ist.

3. Flüssiggaskraftstoff-Zufuhranlage nach Anspruch 1, **dadurch gekennzeichnet, dass** die Ventilbaugruppe (26) den ersten Kraftstoffdurchgang (14) umfasst, der mit einem ersten Abzweigverteiler (30) versehen ist, der mit einer Anzahl von ersten Abzweigdurchgängen (31.1, 31.2, ... 31.N) versehen ist, wobei die ersten Abzweigdurchgänge parallel zueinander angeordnet sind und jeder der ersten Abzweigdurchgänge (31.1, 31.2, ... 31.N) mit einem Ventil (34.1, 34.2, ... 34.N) versehen ist, und dass der zweite Kraftstoffdurchgang (16) mit einem zweiten Abzweigverteiler (36) versehen ist, der mit einer Anzahl von zweiten Abzweigdurchgängen (32.1, 32.2, ... 32.N) versehen ist, wobei die zweiten Abzweigdurchgänge parallel zueinander angeordnet sind und jeder der zweiten Abzweigdurchgänge (32.1, 32.2, ... 32.N) mit einem Ventil (38.1, 38.2, ... 38.N) versehen ist, und wobei jeder erste Abzweigdurchgang (31.1, 31.2, ... 31.N) und jeder jeweilige zweite Abzweigdurchgang (32.1, 32.2, ... 32.N) miteinander und ferner mit einem jeweiligen Kraftstoff-Abgabedurchgang (28.1, 28.2, ... 28.N) verbunden sind.

4. Flüssiggaskraftstoff-Zufuhranlage nach Anspruch 1, **dadurch gekennzeichnet, dass** die Flüssiggaskraftstoff-Zufuhranlage eine Steuereinheit (40) umfasst, die ausführbare Anweisungen umfasst, um Druckbedarfsinformationen von jedem der wenigstens zwei Gasverbraucher (18.1, 18.2, ... 18-N) zu empfangen, und wobei die Steuereinheit mit Anweisungen versehen ist, um den ersten Kraftstoffdurchgang (14) oder den zweiten Kraftstoffdurchgang (16) auf Grundlage der jeweiligen Druckbedarfsinformationen abwechselnd mit jedem der wenigstens zwei Kraftstoff-Abgabedurchgänge (28.1, 28.2, ... 28.N) zu verbinden.

5. Flüssiggaskraftstoff-Zufuhranlage nach Anspruch 4, **dadurch gekennzeichnet, dass** die Steuereinheit (40) ausführbare Anweisungen umfasst, um die Pumpe (22) derart zu steuern, dass der Gasdruck in dem zweiten Kraftstoffdurchgang (16) bei einem Wert gehalten wird, der ein maximaler Wert der erforderlichen Kraftstoffdruckwerte der Gasverbraucher (18.1, 18.2, ... 18.N) ist, die mit der Ventilbaugruppe (26) verbunden sind.

6. Flüssiggaskraftstoff-Zufuhranlage nach Anspruch 1, **dadurch gekennzeichnet, dass** Gasverbraucher (18.1, 18.2, ... 18.N) Kolben-Verbrennungskraftmaschinen sind und die Kraftstoff-Zufuhranlage eine Steuereinheit (40) umfasst, die ausführbare Anweisungen umfasst, um den Druck in dem Behälter (12) zu erfassen und den Bedarf an Kraftstoffdruck einer der laufenden Kraftmaschinen des Antriebsaggregats zu erfassen und um, falls der Druck in dem Behälter höher ist als der Bedarf des Kraftstoffdrucks der Kraftmaschine, dann gasförmiges Gas aus dem Gasbehälter der Kraftmaschine zuzuführen, und um, falls der Druck in dem Behälter niedriger ist als der Bedarf des Kraftstoffdrucks der Kraftmaschine, dann einer Pumpe eine Durchflussmenge an verflüssigten Gas zuzuführen, den Druck des verflüssigten Gases auf wenigstens einen Druck in der Pumpe zu erhöhen, der dem Bedarf des Kraftstoffdrucks gleich ist, und verflüssigtes Gas zu verdampfen und das verdampfte Gas der Kraftmaschine zuzuführen, und um die Anweisungen zu wiederholen, um sie auf jede der Kraftmaschinen anzuwenden, die in dem Antriebsaggregat laufen.

7. Verfahren zum Betreiben eines Antriebsaggregats von Verbrennungskraftmaschinen, die mit verflüssigtem Gas angetrieben werden, mit Hilfe einer Flüssiggaskraftstoff-Zufuhranlage nach Anspruch 1 bis 6, das die folgenden Schritte umfasst:
a) Speichern von Kraftstoff in einem Gasbehälter (12) als verflüssigtes Gas und gasförmiges Gas unter Tieftemperaturumständen,
b) Erfassen des Drucks in dem Behälter und
c) Erfassen des Bedarfs an Kraftstoffdruck in einer der laufenden Kraftmaschinen des Antriebsaggregats,
d) falls der Druck in dem Behälter höher ist als der Bedarf des Kraftstoffdrucks der Kraftmaschine, dann Zuführen von gasförmigem Gas aus dem Gasbehälter zu der Kraftmaschine über einen ersten Kraftstoffdurchgang (14), der sich in einen Ausdehnungsraum (12.2) des Gasbehälters (12) öffnet, und,
e) falls der Druck in dem Behälter niedriger ist als der Bedarf des Kraftstoffdrucks der Kraftmaschine, dann Zuführen einer Durchflussmenge an verflüssigten Gas zu einer Pumpe über einen zweiten Kraftstoffdurchgang (16), der sich in eine untere Sektion (12.1) des Gasbehälters (12) öffnet, Erhöhen des Drucks des verflüssigten Gases auf wenigstens einen Druck in der Pumpe, der dem Bedarf des Kraftstoffdrucks gleich ist, und Verdampfen von verflüssigtem Gas und Zuführen des verdampften Gases zu der Kraftmaschine,
f) Wiederholen wenigstens der Schritte c), d) und e) an jeder der Kraftmaschinen, die in dem Antriebsaggregat laufen, wobei
eine Druckbedarfsinformation über jede der wenigstens zwei Kraftmaschinen (18.1, 18.2, ... 18.N) erfasst wird und der erste Kraftstoffdurchgang (14) oder der zweite Kraftstoffdurchgang (16) auf Grundlage der jeweiligen Druckbedarfsinformationen abwechselnd mit jedem der wenigstens zwei Kraftstoff-Abgabedurchgänge (28.1, 28.2, ... 28.N) verbunden wird.

8. Verfahren zum Betreiben eines Antriebsaggregats von Verbrennungskraftmaschinen nach Anspruch 7, **dadurch gekennzeichnet, dass** die Pumpe (22) derart gesteuert wird, dass der Gasdruck in dem zweiten Kraftstoffdurchgang (16) bei einem Wert gehalten wird, der ein maximaler Wert der erforderlichen Kraftstoffdruckwerte der Gasverbraucher (18.1, 18.2, ... 18.N) ist, die mit der Ventilbaugruppe (26) verbunden sind.

## Revendications

1. Système d'alimentation en combustible à gaz liquéfié comprenant :
- un réservoir à gaz liquéfié (12) conçu pour stocker du gaz liquéfié et du gaz gazeux dans des circonstances cryogéniques,
- un premier passage à combustible (14) ouvrant sur un espace vide (12.2) du réservoir à gaz (12),
- un second passage à combustible (16) ouvrant sur une section inférieure (12.1) du réservoir à gaz (12) et pourvu d'une pompe contrôlable (22),
- au moins deux passages de délivrance de combustible (28.1, 28.2, ... 28.N) dont chacun est conçu pour convoyer du gaz vers un unique consommateur de gaz parmi au moins deux consommateurs de gaz (18.1, 18.2, ... 18.N), **caractérisé en ce que** le système d'alimentation en combustible à gaz liquéfié comprend
- un assemblage de soupape (26) conçu pour connecter le premier passage à combustible (14) ou le second passage à combustible (16) alternativement à chacun des au moins deux passages de délivrance de combustible (28.1, 28.2, ... 28.N).

2. Système d'alimentation en combustible à gaz liquéfié selon la revendication 1, **caractérisé en ce que** l'assemblage de soupape (26) comprend un premier passage à combustible (14) qui est pourvu d'un premier collecteur ramifié (30) qui est pourvu d'un certain nombre de premiers passages ramifiés (31.1, 31.2,... 31.N) où les premiers passages ramifiés sont disposés parallèlement les uns par rapport aux autres, et que le second passage à combustible (16) est pourvu d'un second collecteur ramifié (36) qui est pourvu d'un certain nombre de seconds passages ramifiés (32.1, 32.2, ... 32.N) où les premiers passages ramifiés sont disposés parallèlement les uns par rapport aux autres, et où chaque premier passage ramifié (31.1, 31.2, ... 31.N) et chaque second passage ramifié respectif (32.1, 32.2, ... 32.N) sont connectés l'un à l'autre et en outre à un passage de délivrance de combustible respectif (28.1, 28.2, ... 28.N) et où le passage de délivrance de combustible est connecté de manière sélectionnable soit au premier passage ramifié (31.1, 31.2, ... 31.N), soit au second passage ramifié (32.1, 32.2, ... 32.N) par une soupape à trois distributions (35.1, 35.2, ... 35.N).

3. Système d'alimentation en combustible à gaz liquéfié selon la revendication 1, **caractérisé en ce que** l'assemblage de soupape (26) comprend le premier passage à combustible (14) qui est pourvu d'un premier collecteur ramifié (30) qui est pourvu d'un certain nombre de premiers passages ramifiés (31.1, 31.2, ... 31.N) où les premiers passages ramifiés sont disposés parallèlement les uns par rapport aux autres, et que chacun des premiers passages ramifiés (31.1, 31.2, ... 31.N) est pourvu d'une soupape (34.1, 34.2, ... 34.N), et que le second passage à combustible (16) est pourvu d'un second collecteur ramifié (36) qui est pourvu d'un certain nombre de seconds passages ramifiés (32.1, 32.2, ... 32.N), où les seconds passages ramifiés sont disposés parallèlement les uns aux autres et où chacun des seconds passages ramifiés (31.1, 31.2, ... 31.N) est pourvu d'une soupape (38.1, 38.2, ... 38.N), et où chaque second passage ramifié (32.1, 32.2, ... 32.N) est connecté aux autres et en outre à un passage de délivrance de combustible respectif (28.1, 28.2, ... 28.N).

4. Système d'alimentation en combustible à gaz liquéfié selon la revendication 1, **caractérisé en ce que** le système d'alimentation en combustible comprend une unité de commande (40) qui comprend des instructions exécutables pour recevoir des informations de demande de pression de chacun des au moins deux consommateurs de gaz (18.1, 18.2, ... 18.N) et laquelle unité de commande est pourvue d'instructions pour connecter le premier passage à combustible (14) ou le second passage à combustible (16) alternativement à chacun des au moins deux passages de délivrance de combustible (28.1, 28.2, ... 28.N) en se basant sur les informations de demande de pression respectives.

5. Système d'alimentation en combustible à gaz liquéfié selon la revendication 4, **caractérisé en ce que** l'unité de commande (40) comprend une instruction exécutable pour commander la pompe (22) de manière à ce que la pression de gaz dans le second passage à combustible (16) soit maintenue à une valeur qui est la valeur maximum des valeurs de pression de combustible requises des consommateurs de gaz (18.1, 18.2, ... 18.N) connectés à l'assemblage de soupape (26).

6. Système d'alimentation en combustible à gaz liquéfié selon la revendication 1, **caractérisé en ce que** les consommateurs de gaz (18.1, 18.2, ... 18.N) sont des moteurs à piston à combustion interne et que le système d'alimentation en combustible comprend une unité de commande (40) qui comprend des instructions exécutables pour détecter la pression dans le réservoir (12), et pour détecter la demande de pression de combustible d'un des moteurs en fonctionnement de la centrale électrique et, si la pression dans le réservoir est supérieure à la demande de pression de combustible du moteur, pour apporter ensuite du gaz gazeux depuis le réservoir de gaz au moteur et, si la pression dans le réservoir est inférieure à la demande de la pression de combustible du moteur, pour apporter ensuite un débit de gaz liquéfié à une pompe, en augmentant la pression du gaz liquéfié jusqu'à au moins une pression égale à la demande de pression de combustible dans la pompe, et en évaporant du gaz liquéfié et en apportant du gaz au moteur, et pour répéter les instructions pour appliquer chacun des moteurs fonctionnant dans la centrale électrique.

7. Procédé d'actionnement d'une centrale électrique de moteurs à combustion interne alimentés avec du gaz liquéfié au moyen d'un système d'alimentation en combustible à gaz liquéfié selon l'une quelconque des revendications 1 à 6, comprenant les étapes suivantes :
a) stockage de combustible dans un réservoir à gaz (12) sous forme de gaz liquéfié et de gaz gazeux dans des circonstances cryogéniques,
b) détection de la pression dans le réservoir, et
c) détection de la demande de pression de combustible d'un des moteurs en fonctionnement de la centrale électrique,
d) si la pression dans le réservoir est supérieure à la demande de pression de combustible du moteur, alors apport de gaz gazeux depuis le réservoir de gaz vers le moteur par l'intermédiaire d'un premier passage à combustible (14) ouvrant sur un espace vide (12.2) du réservoir à gaz (12), et
e) si la pression dans le réservoir est inférieure à la demande de pression de combustible du moteur, alors apport d'un débit de gaz liquéfié à une pompe par l'intermédiaire d'un second passage à combustible (16) ouvrant sur une section inférieure (12.1) du réservoir à gaz (12), en augmentant la pression du gaz liquéfié jusqu'à au moins une pression égale à la demande de pression de combustible dans la pompe et en évaporant du gaz liquéfié et en apportant le gaz évaporé au moteur,
f) répétition au moins des étapes c), d) et e) pour chacun des moteurs fonctionnant dans la centrale électrique,
une information de demande de pression de chacun des au moins deux moteurs (18.1, 18.2, ... 18.N) étant obtenue et le premier passage à combustible (14) ou le second passage à combustible (16) étant connecté alternativement à chacun desdits au moins deux passages de délivrance de combustible (28.1, 28.2, ... 28.N) en se basant sur les informations de demande de pression respectives.

8. Procédé d'actionnement d'une centrale électrique de moteurs à combustion interne selon la revendication 7, **caractérisé en ce que** la pompe (22) est commandée de manière à ce que la pression de gaz dans le second passage à combustible (16) soit maintenue à une valeur qui est la valeur maximum des valeurs de pression de combustible requises des moteurs (18.1, 18.2, ... 18.N) connectés à l'assemblage de soupape (26).
